(19) Europäisches Patentamt / European Patent Office / Office européen des brevets

(11) **EP 3 981 068 B1**

(12) **FASCICULE DE BREVET EUROPEEN**

(45) Date de publication et mention
de la délivrance du brevet:
**27.11.2024 Bulletin 2024/48**

(21) Numéro de dépôt: **20726497.9**

(22) Date de dépôt: **25.05.2020**

(51) Classification Internationale des Brevets (IPC):
**H02P 21/13** *(2006.01)* **H02P 23/12** *(2006.01)*
**H02P 21/14** *(2016.01)* **H02P 21/20** *(2016.01)*
**H02P 23/14** *(2006.01)*

(52) Classification Coopérative des Brevets (CPC):
**H02P 21/13; H02P 21/14; H02P 21/20;**
**H02P 23/12; H02P 23/14**

(86) Numéro de dépôt international:
**PCT/EP2020/064454**

(87) Numéro de publication internationale:
**WO 2020/244954 (10.12.2020 Gazette 2020/50)**

(54) **PROCÉDÉ D'ESTIMATION DU COUPLE ÉLECTROMAGNÉTIQUE D'UNE MACHINE ÉLECTRIQUE SYNCHRONE**

VERFAHREN ZUR SCHÄTZUNG DES ELEKTOMAGNETISCHEN DREHMOMENTS EINER ELEKTRISCHEN SYNCHRONMASCHINE

METHOD FOR ESTIMATING THE ELECTOMAGNETIC TORQUE OF A SYNCHRONOUS ELECTRIC MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.06.2019 FR 1905899**

(43) Date de publication de la demande:
**13.04.2022 Bulletin 2022/15**

(73) Titulaire: **Ampere SAS**
**92100 Boulogne-Billancourt (FR)**

(72) Inventeurs:
 • **GHANES, Malek**
 **44300 Nantes (FR)**

 • **HAMIDA, Mohamed**
 **44300 Nantes (FR)**
 • **KOTEICH, Mohamad**
 **91440 Bures sur yvette (FR)**
 • **TAHERZADEH, Mehdi**
 **44300 NANTES (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**CN-A- 102 611 381      CN-A- 104 184 382**
**CN-A- 107 769 636      FR-A1- 3 035 755**
**US-A1- 2012 059 642**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un procédé d'estimation du couple électromagnétique d'une machine électrique synchrone triphasée et, en particulier, d'une machine électrique synchrone triphasée à aimants permanents (MSAP). L'invention trouve une application avantageuse dans le domaine des véhicules automobiles électriques hybrides et électriques, dans lesquels ce type de machine est largement utilisé comme moteur de traction, en mode de traction électrique du véhicule, notamment en raison de sa robustesse, de sa simplicité et de son faible coût de maintenance.

Dans un véhicule automobile à traction électrique, la connaissance de la valeur réelle du couple fourni par la machine électrique est nécessaire, en particulier pour des raisons de sécurité et/ou de contrôle. En général, la puissance mécanique d'entraînement de la machine est obtenue à partir d'un couplemètre, qui mesure le couple sur l'arbre. Pour plusieurs raisons telles que le coût, la fiabilité et l'encombrement, il est toutefois préférable d'éliminer le couplemètre du système d'entraînement et de le remplacer par un estimateur de couple. Un estimateur de couple est conçu pour estimer la valeur réelle du couple fourni par la machine électrique en utilisant certaines variables disponibles telles que les tensions, les courants et la position du rotor.

Classiquement, les tensions et les courants triphasés de la machine électrique peuvent être modélisés grâce à deux modèles diphasés, respectivement en utilisant la transformée de Clarke, qui s'appui sur un repère diphasé fixe lié au stator, et la transformée de Park, qui s'appui sur un repère diphasé tournant lié au rotor. Les grandeurs ainsi transformés dans les repères liés au stator et au rotor s'expriment en utilisant les indices $\alpha$, $\beta$ d'une part, et d, q, d'autre part, correspondant respectivement aux deux axes dans le repère diphasé fixe et aux deux axes dans le repère diphasé tournant.

On connaît à l'heure actuelle plusieurs techniques d'estimation du flux statorique d'une machine électrique synchrone triphasée à aimants permanents à partir des tensions et des courants diphasés. Ces techniques sont classées en deux catégories, respectivement basées sur un modèle de tension et sur un modèle de courant.

Concernant les techniques d'estimation du flux basées sur le modèle de tension, la force électromotrice est calculée en utilisant les tensions et les courants mesurés dans le repère lié au stator. Ensuite, le flux du stator est obtenu en calculant l'intégrale de la force électromotrice. Cette estimation basée sur le modèle de tension nécessite néanmoins de résoudre plusieurs problèmes. En particulier, un problème à résoudre est de considérer les fonctions de saturation dans le modèle de machine utilisé, ainsi que les conditions magnétiques initiales inconnues de la machine dans le modèle, se rapportant aux inductances linéaires et au flux d'aimant permanent.

Un autre problème à résoudre est de maintenir une observabilité à basse vitesse ou à vitesse nulle.

Ces problèmes sont principalement dus à l'utilisation d'un intégrateur en boucle ouverte de la force électromotrice pour estimer le flux statorique.

Dans l'état de la technique, on connaît les documents suivants qui concernent l'estimation du flux basée sur le modèle de tension.

Le document US9985564 décrit un procédé pour estimer le flux statorique d'une machine électrique synchrone triphasée à aimants permanents, basé sur le modèle de tension dans le repère diphasé $\alpha,\beta$. Au lieu d'utiliser un intégrateur pur pour intégrer la force électromotrice, il propose d'utiliser un filtre passe-bas pour force électromotrice, puis d'ajouter un compensateur pour corriger les changements de gain et de phase crées par le filtre.

Le document CN103346726 propose également d'estimer le flux d'une machine électrique synchrone triphasée à aimants permanents, à partir de la force électromotrice. Il propose d'utiliser un filtre de second ordre au lieu d'un intégrateur pur. Il propose également d'estimer l'inductance de l'axe q dans le repère diphasé pour améliorer l'estimation avec le modèle de tension.

Le document US7098623 décrit une méthode pour estimer la position du rotor en estimant les flux statoriques avec le modèle de tension dans le repère diphasé d,q. Il propose une observation adaptative du flux basée sur l'injection de signaux haute fréquence à basse vitesse.

Le document EP1513250 décrit une méthode de combinaison des méthodes d'estimation du flux par modèle de tension et l'injection de signaux haute fréquence pour estimer la position.

Le document FR3035755B1 décrit un procédé de commande d'une machine électrique synchrone à aimants permanents pour véhicule automobile électrique ou hybride commandé par une unité de commande électronique apte à émettre des consignes de courant. Le procédé comprend des étapes au cours desquelles : on mesure les courants au niveau des phases du stator de la machine dans un repère triphasé fixe lié au stator, et on reçoit des valeurs de tension appliquée dans un repère tournant lié au rotor, on détermine les courants au niveau des phases du stator dans un repère diphasé tournant lié au rotor en fonction des mesures de courant dans le repère triphasé et de la position rotorique, on détermine le flux magnétique du rotor par un observateur fonction des courants statoriques et des tensions statoriques exprimés dans le repère de Park, et on règle l'observateur par un algorithme de Kalman en version étendue discrète. Le procédé comprend également l'introduction de variables d'états, lesdites variables d'états étant estimées par un observateur.

Concernant les méthodes basées sur le modèle de courant, le flux est estimé en utilisant les courants, de préférence dans le repère lié au rotor. Ces méthodes basées sur le modèle de courant permettent de pallier les limitations évoquées ci-dessus liées aux méthodes basées sur le modèle de tension, car elles n'impliquent pas d'utiliser d'intégrateurs en boucle ouverte. Cependant, les problèmes à résoudre à l'égard de ces méthodes concernent les variations des inductances à cause de la saturation magnétique, les incertitudes du flux d'aimant permanent et la nécessité d'un capteur de position.

Dans l'état de la technique, on connaît les documents suivants se rapportant à l'estimation du flux basée sur le modèle de courant.

Le document US7774148 décrit une méthode d'estimation du couple d'une machine électrique synchrone triphasée à aimants permanents, basée sur une estimation de flux statorique en utilisant le modèle de courant. Les flux des axes d et q sont représentés par deux fonctions des courants non linéaires.

Le document CN103872951 décrit un estimateur de couple d'une machine électrique synchrone triphasée à aimants permanents, basé sur une estimation de flux statorique avec un observateur par mode glissant appliqué sur un modèle de tension combiné avec un modèle de courant.

Le document JP2004166408 décrit un estimateur adaptatif de flux statorique pour une machine électrique synchrone triphasée à aimants permanents, basé sur le modèle de tension avec un terme de correction basé sur le modèle de courant.

Un objet de l'invention est un procédé d'estimation du couple électromagnétique d'une machine électrique synchrone triphasée à aimants permanents pour véhicule automobile électrique ou hybride. Le procédé comprend des étapes au cours desquelles :

on mesure les courants et tensions au niveau des phases du stator de la machine dans un repère triphasé fixe lié au stator,

on détermine les courants et tensions au niveau des phases du stator dans un repère diphasé tournant lié au rotor en fonction des mesures de courant et de tension dans le repère triphasé,

on détermine un modèle flux-courant statorique de la machine, prenant en compte des fonctions de saturation de la machine, de façon à considérer dans le modèle des variations de paramètres magnétiques de la machine causées par la saturation magnétique de la machine,

on introduit dans le modèle des variables d'état décrivant les incertitudes paramétriques inhérentes aux variations des paramètres magnétiques de la machine,

on estime lesdites variables d'état dans le modèle par un observateur fonction des courants et des tensions statoriques exprimés dans le repère diphasé tournant lié au rotor,

on calcule le flux statorique à partir des variables d'état estimées, et on calcule le couple électromagnétique à partir du flux statorique calculé.

De préférence, on règle l'observateur par un algorithme de type Kalman.

Avantageusement, le réglage de l'observateur comprend la réception de la vitesse angulaire du rotor comme entrée du système.

Avantageusement, le gain de l'observateur est variable dans le temps.

Avantageusement, les paramètres magnétiques considérés sont les inductances linéaires du stator sur chaque axe respectivement du repère diphasé et le flux magnétique généré par les aimants permanents du rotor de la machine.

De préférence, les fonctions de saturation représentent la saturation magnétique et la saturation croisée dans la machine.

D'autres caractéristiques et avantages de la présente invention apparaîtront plus clairement à la lecture de la description suivante donnée à titre d'exemple illustratif et non limitatif et faite en référence à la figure unique suivante :

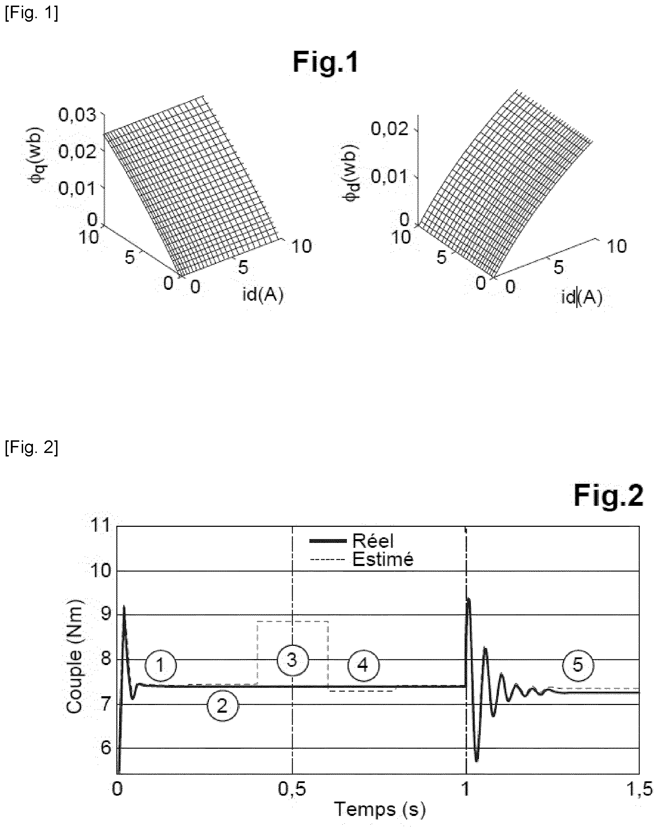

[Fig. 1] est une carte de courant-flux pour une machine électrique synchrone à aimants permanents très saturée et testée en simulation,

[Fig. 2] est une représentation graphique de la variation du couple, réel et estimé, généré par la machine simulée à la figure 1, illustrant les effets sur l'estimation de couple obtenue des incertitudes paramétriques et des fonctions de saturations considérées dans le modèle de la machine, sans l'observation des variables d'état introduites dans le modèle, décrivant ces incertitudes paramétriques,

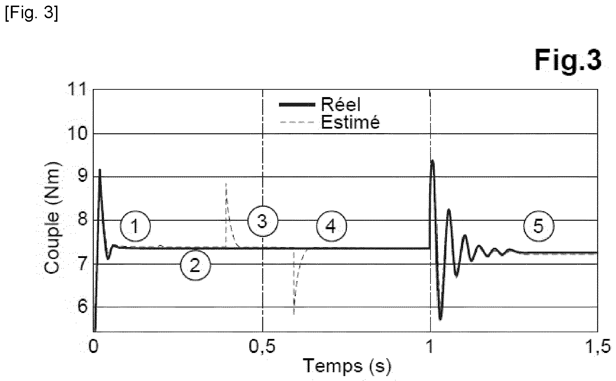

[Fig. 3] est une représentation graphique de la variation du couple, réel et estimé, généré par la machine simulée à la figure 1, illustrant les effets sur l'estimation de couple obtenue des incertitudes paramétriques et des fonctions de saturations considérées dans le modèle de la machine, avec mise en oeuvre, selon les principes de l'invention, de l'observation des variables d'état introduites dans le modèle, décrivant ces incertitudes paramétriques.

Dans le cadre de la présente description, on s'intéresse donc plus particulièrement au cas des machines électriques synchrones triphasées à aimants permanents et, encore plus particulièrement, au cas de ces machines très saturées, utilisées dans les applications de véhicules hybrides et électriques.

Dans une première étape, on mesure les courants et les tensions pour chacune des trois phases du stator de la machine synchrone triphasée à aimants permanents.

Puis, on applique la transformée de Park aux trois courants et aux trois tensions mesurées de manière à obtenir une composante directe $i_d$ et une composante quadratique $i_q$ de courant, ainsi qu'une composante directe $v_d$ et une composante quadratique $v_q$ de tension.

Il est ainsi possible de transposer les trois courants et les trois tensions sinusoïdaux du stator relatives aux trois phases du système triphasé dans un espace où les trois signaux sinusoïdaux de courant et de tension s'expriment sous la forme de deux signaux constants de courant et de tension, respectivement une composante sur l'axe direct et une composante sur l'axe en quadrature q. Pour cela, le repère de Park s'appui sur un repère lié au rotor.

L'estimateur de couple qui va maintenant être décrit est basé sur une estimation de flux statorique de la machine en utilisant le modèle de courant.

Par principe, la saturation magnétique de la machine, ainsi que l'effet de saturation croisée de la machine sont souvent négligés. Dans la réalité, la relation entre flux et courant de phase statorique est linéaire pour des faibles niveaux de flux. Toutefois, à partir d'un seuil donné, cette linéarité n'est plus maintenue ; ce qui induit généralement un fonctionnement saturé. Ainsi, les inductances et le flux magnétique des aimants permanents de la machine varient fortement d'une manière prédictible à cause de la saturation magnétique de la machine. Aussi, on propose ici un nouveau modèle flux-courant qui prend en compte ces variations. En effet, la prise en compte du phénomène de saturation est nécessaire pour améliorer le comportement du modèle.

Pour ce faire, nous allons considérer des conditions magnétiques inconnues de la machine dans ce modèle. Les conditions magnétiques inconnues que l'on considère sont les inductances linéaires du stator, le flux magnétique des aimants permanents et les fonctions de saturation de la machine, qui représentent la saturation magnétique et la saturation croisée de la machine.

La prise en considération dans le modèle de ces conditions magnétiques inconnues de la machine se traduit, dans l'espace de Park, par le système d'équations suivant :

$$\begin{cases} \dfrac{d\varphi_d}{dt} = v_d - R_s i_d + \omega_e \varphi_q \\[2mm] \dfrac{d\varphi_q}{dt} = v_q - R_s i_q - \omega_e \varphi_d - \omega_e \phi_f - \omega_e \Delta \phi_f \end{cases} \quad (1)$$

$$\begin{cases} i_d = \left( \dfrac{1}{L_{d0}} + \Delta L_{d0}^{-1} \right) \varphi_d + f_{1sat}\left( \varphi_d, \varphi_q \right) + \Delta f_{1sat} \\[2mm] i_q = \left( \dfrac{1}{L_{q0}} + \Delta L_{q0}^{-1} \right) \varphi_q + f_{2sat}\left( \varphi_d, \varphi_q \right) + \Delta f_{2sat} \end{cases} \quad (2)$$

Avec $\varphi_d$ et $\varphi_q$ les composantes du flux statorique généré sur les axes respectivement direct d et en quadrature q du plan de Park de la machine, $v_d$ et $v_q$ les tensions appliquées sur les deux axes respectivement direct d et en quadrature q du plan de Park de la machine, $i_d$ et $i_q$ les courants circulant dans la machine sur les deux axes respectivement direct d et en quadrature q du plan de Park de la machine, $R_s$ la résistance équivalente du stator de la machine, $L_{d0}$ et $L_{q0}$ les inductances linéaires du stator sur chaque axe respectivement direct d et en quadrature q du plan de Park de la machine, $\phi_f$ le flux magnétique généré par les aimants permanents du rotor et $\omega_e$ la vitesse angulaire du rotor.

$f_{sat(1,2)}$ sont des fonctions qui représentent la saturation magnétique et la saturation croisée dans la machine.

Et :

$$\begin{cases} \Delta\phi_f = \phi_{fm} - \phi_f \\[2mm] \Delta L_{d0}^{-1} = \dfrac{1}{L_{d0m}} - \dfrac{1}{L_{d0}} \\[2mm] \Delta L_{q0}^{-1} = \dfrac{1}{L_{q0m}} - \dfrac{1}{L_{q0}} \\[2mm] \Delta f_{sat(1,2)} = f_{sat(1,2)m} - f_{sat(1,2)} \end{cases}$$

$$(3)$$

Avec $L_{d0m}$ et $L_{q0m}$ les valeurs exactes des coefficients linéaires entre flux et courants statoriques sur chaque axe respectivement direct d et en quadrature q du plan de Park de la machine, $\phi_{fm}$ la valeur réelle du flux magnétique généré par les aimants permanents du rotor, et $f_{sat(1,2)m}$ les fonctions respectives de saturation réelle de la machine.

Ainsi, les paramètres $\Delta L_{d0}^{-1}$, $\Delta L_{q0}^{-1}$, $\Delta\phi_f$ et $\Delta f_{sat(1,2)}$ représentent les écarts entre les valeurs réelles et les valeurs de référence de ces paramètres dans le modèle proposé par les équations (1) et (2).

Puis on va introduire un ensemble de nouvelles variables $g_1$ et $g_2$ dans le modèle qui correspondent aux conditions magnétiques inconnues mentionnées. Pour ce faire, en considérant d'abord les courants de stator $i_d$ et $i_q$ comme variables d'état, on remplace l'équation (1) dans l'équation (2) et on obtient :

$$\begin{cases} \dfrac{di_d}{dt} = -\dfrac{R_s}{L_{d0}}i_d + \dfrac{\omega_e L_{q0}}{L_{d0}}i_q - \dfrac{\omega_e L_{q0}}{L_{d0}}g_2 + \dfrac{1}{L_{d0}}v_d + \dfrac{dg_1}{dt} \\[3mm] \dfrac{di_q}{dt} = \dfrac{\omega_e L_{d0}}{L_{q0}}i_d - \dfrac{R_s}{L_{q0}}i_q + \dfrac{\omega_e L_{d0}}{L_{q0}}g_1 - \dfrac{\omega_e \phi_f}{L_{q0}} + \dfrac{1}{L_{q0}}v_q + \dfrac{dg_2}{dt} \end{cases}$$

$$(4)$$

Avec :

$$\begin{cases} g_1 = \Delta L_{d0}^{-1}\varphi_d + f_{1sat}\left(\varphi_d, \varphi_q\right) + \Delta f_{1sat} - \dfrac{\Delta\phi_f}{L_{d0}} \\[3mm] g_2 = \Delta L_{q0}^{-1}\varphi_q + f_{2sat}\left(\varphi_d, \varphi_q\right) + \Delta f_{2sat} \end{cases}$$

$$(5)$$

Ainsi, les variables $g_1$ et $g_2$ regroupent toutes incertitudes magnétiques de la machine, telles qu'elles résultent des variations des inductances à cause de la saturation magnétique et des incertitudes du flux d'aimant permanent. Autrement dit, les variables $g_1$ et $g_2$, que nous allons observer, permettent de représenter le comportement magnétique de la machine, qui varie à cause de la saturation magnétique. L'introduction dans le modèle des incertitudes paramétriques, décrites par les variables $g_1$ et $g_2$, permet de traduire le fait que la valeur des paramètres magnétiques du système (inductance et flux d'aimant permanent) peut différer de la modélisation à cause de la saturation de la machine. L'observation de ces variables, comme il va être décrit ci-après, va permettre de corriger ces incertitudes.

On va ainsi estimer ces variables présentées dans le modèle en utilisant un observateur approprié. On se base donc sur le modèle flux-courant de la machine décrit ci-dessus, qui prend en compte les variations, causées par la saturation magnétique de la machine, des paramètres magnétiques de la machine que sont les inductances et le flux d'aimant permanent, et sur la théorie d'observateur, qui comprend les notions d'observabilité et d'observateur d'état. Ainsi, lorsque l'état d'un système n'est pas mesurable, on conçoit un observateur qui permet de reconstruire cet état à partir d'un modèle du système et de mesures d'autres états. On entend par état un ensemble de valeurs physiques définissant le système observé. On utilisera ici un observateur de type Kalman pour observer les incertitudes magnétiques de la machine telles que caractérisées par les variables $g_1$ et $g_2$.

Aussi, on considère les variables $g_1$ et $g_2$ comme deux nouvelles variables d'état. Dans ce modèle, $g_1$ et $g_2$ sont supposées être des fonctions constantes par morceaux, c'est-à-dire des fonctions dont les valeurs sont constantes sur des intervalles. Dans le modèle de l'Eq.4, les dérivées de chaque terme de g1 et g2 (Eq.5) sont supposées être des fonctions constantes par morceaux. Le système d'équations modélisant la machine électrique peut être reformulé sous la forme générale des systèmes non linéaires :

$$\frac{dx}{dt} = f(x, u)$$

$$y = h(x)$$

avec :

$$x = \begin{bmatrix} i_d \\ i_q \\ g_1 \\ g_2 \end{bmatrix},$$

$$u = \begin{bmatrix} v_d \\ v_q \end{bmatrix},$$

et

$$y = \begin{bmatrix} i_d \\ i_q \end{bmatrix} = h(x) = C.x = \begin{bmatrix} 1 & 0 & 0 & 0 \\ 0 & 1 & 0 & 0 \end{bmatrix} x$$

Pour le système ainsi modélisé, on peut formaliser un observateur par l'équation suivante :

$$\frac{d}{dt}\begin{bmatrix} \hat{i}_d \\ \hat{i}_q \\ \hat{g}_1 \\ \hat{g}_2 \end{bmatrix} = \overbrace{\begin{bmatrix} -\frac{R_s}{L_{d0}} & \frac{\omega_e L_{q0}}{L_{d0}} & 0 & -\frac{\omega_e L_{q0}}{L_{d0}} \\ -\frac{\omega_e L_d}{L_{q0}} & -\frac{R_s}{L_{q0}} & \frac{\omega_e L_{d0}}{L_{q0}} & 0 \\ 0 & 0 & 0 & 0 \\ 0 & 0 & 0 & 0 \end{bmatrix}}^{A}\overbrace{\begin{bmatrix} \hat{i}_d \\ \hat{i}_q \\ \hat{g}_1 \\ \hat{g}_2 \end{bmatrix}}^{\hat{x}} + \overbrace{\begin{bmatrix} \frac{1}{L_d} & 0 \\ 0 & \frac{1}{L_q} \\ 0 & 0 \\ 0 & 0 \end{bmatrix}}^{B}\overbrace{\begin{bmatrix} v_d \\ v_q \end{bmatrix}}^{u} + \overbrace{\begin{bmatrix} 0 \\ -\frac{\omega_e \phi_f}{L_q} \\ 0 \\ 0 \end{bmatrix}}^{v} + K\left( y - C\overbrace{\begin{bmatrix} \hat{i}_d \\ \hat{i}_q \\ \hat{g}_1 \\ \hat{g}_2 \end{bmatrix}}^{\hat{x}} \right)$$

(6)

Avec $\hat{x}$: le vecteur des états estimés correspondant au vecteur d'état :

$$x = \begin{bmatrix} i_d \\ i_q \\ g_1 \\ g_2 \end{bmatrix}$$

et K : le gain de l'observateur.

Le choix du gain K, qui multiplie le terme d'erreur permet de régler l'observateur. Ce gain est calculé par l'algorithme de type Kalman.

La vitesse angulaire électrique du rotor est considérée comme une entrée pour le système matriciel A. Cela permet l'observation de l'état. On utilise donc un gain d'observateur K variant dans le temps comme:

$$K = P^{-1} C^T R^{-1} \qquad (7)$$

où la dynamique de la variable P est définie comme suit :

$$\frac{dP}{dt} = -A^T P - PA - PQP + C^T R^{-1} C \qquad (8)$$

Les matrices Q et R sont des matrices de pondération symétriques définies positives.

Il reste à calculer le flux statorique et par conséquent le couple électromagnétique de la machine, en utilisant les deux variables $g_1$ et $g_2$ estimées par l'observateur.

Ainsi, après avoir estimé les variables $g_1$ et $g_2$, les flux statoriques globaux peuvent être calculés sur la base des équations (2) et (5) définies ci-dessus.

$$\begin{cases} \hat{\lambda}_d = \phi_f + \Delta\phi_f + \hat{\varphi}_d = \phi_f + L_{d0}\left(i_d - \hat{g}_1\right) \\ \hat{\lambda}_q = \hat{\varphi}_q = L_{q0}\left(i_q - \hat{g}_2\right) \end{cases} \qquad (9)$$

Le couple électromagnétique généré par la machine électrique synchrone à aimants permanents peut alors se calculer de la façon suivante :

$$\hat{T}_e = \left(\frac{3}{2}\right)(p)\left(\hat{\lambda}_d i_q - \hat{\lambda}_q i_d\right) \qquad (10)$$

Avec $\hat{T}_e$ le couple électromagnétique généré par la machine, p le nombre de paire de pôles du rotor, et $\hat{\lambda}_d$ et $\hat{\lambda}_q$ les composantes telles que calculées selon l'équation (9) du flux statorique sur les axes respectivement direct et en quadrature de la machine.

Ainsi, les incertitudes sur les inductances linéaires, le flux magnétique des aimants permanents ou les fonctions de saturation peuvent être corrigées grâce l'estimation des deux variables $g_1$ et $g_2$. A l'aide de l'observateur proposé, il est ainsi possible de calculer le flux et le couple électromagnétique généré par la machine même en cas d'incertitude sur les paramètres magnétiques concernant les inductances linéaires et le flux d'aimant permanent, ou de saturation de la machine. Ces incertitudes paramétriques peuvent également être corrigées lorsque les paramètres d'inductance linéaire, de flux d'aimant permanent ou de saturation changent lentement pendant le mouvement de la machine.

On va maintenant illustrer dans le cadre d'un exemple de machine simulée, les résultats de l'estimation du couple électromagnétique mise en oeuvre grâce à l'estimateur de couple décrit ci-dessus.

On considère les fonctions de saturation $f_{sat(1,2)}$ suivantes pour la machine simulée :

$$\begin{cases} f_{1sat}\left(\varphi_d, \varphi_q\right) = 3k_1\varphi_d^2 + k_2\varphi_q^2 + 4k_3\varphi_d^3 + 2k_4\varphi_d\varphi_q^2 \\ f_{2sat}\left(\varphi_d, \varphi_q\right) = 2k_2\varphi_d\varphi_q + 2k_4\varphi_d^2\varphi_q + 4k_5\varphi_q^3 \end{cases}$$

Les paramètres $k_1$ à $k_5$ sont des coefficients nécessaires pour évaluer les fonctions de saturation. Plus précisément, les paramètres $k_1$ à $k_5$ sont des coefficients constants obtenus préalablement de manière empirique La figure 1 illustre une carte de courant-flux pour la machine saturée testée en simulation.

La figure 2 est une représentation graphique de la variation temporelle des couples réel et estimé de la machine testée en simulation dont la carte courant-flux est représentée à la figure 1, avec une vitesse constante de 1000 tr/min. Les régions référencées 2 et 4, 3, et 5 sur la figure 2 montrent respectivement l'effet des incertitudes sur les inductances linéaires, l'effet des incertitudes sur le flux magnétique généré par les aimants permanents et la considération des fonctions de saturation dans le modèle de machine, sans observation des deux variables $g_1$ et $g_2$ introduites dans le modèle de la machine conformément à l'invention.

Les régions mêmement référencées sur la figure 3 montrent également respectivement l'effet des incertitudes sur les inductances linéaires, l'effet des incertitudes sur le flux d'aimant permanent et la considération des fonctions de saturation dans le modèle de machine, mais cette fois avec observation des deux variables $g_1$ et $g_2$ introduites dans le modèle de la machine conformément à l'invention. Ainsi, sur la figure 3, on peut observer que le couple estimé suit parfaitement le couple réel, malgré les incertitudes paramétriques liées aux inductances et au flux d'aimant permanent et malgré la forte saturation de la machine.

**Revendications**

1.  Procédé d'estimation du couple électromagnétique d'une machine électrique synchrone triphasée à aimants permanents pour véhicule automobile électrique ou hybride, le procédé comprenant des étapes au cours desquelles:

    on mesure les courants et tensions au niveau des phases du stator de la machine dans un repère triphasé fixe lié au stator,
    on détermine les courants et tensions au niveau des phases du stator dans un repère diphasé tournant lié au rotor en fonction des mesures de courant et de tension dans le repère triphasé,
    on détermine un modèle flux-courant statorique de la machine, prenant en compte des fonctions de saturation de la machine, de façon à considérer dans le modèle des variations de paramètres magnétiques de la machine causées par la saturation magnétique de la machine,
    on introduit dans le modèle des variables d'état ($g_1$, $g_2$) décrivant les incertitudes paramétriques inhérentes aux variations des paramètres magnétiques de la machine,
    lesdites variables d'état ($g_1$, $g_2$) étant définies par les formules suivantes :

$$\begin{cases} g_1 = \Delta L_{d0}^{-1}\varphi_d + f_{1sat}\left(\varphi_d, \varphi_q\right) + \Delta f_{1sat} - \dfrac{\Delta\phi_f}{L_{d0}} \\ g_2 = \Delta L_{q0}^{-1}\varphi_q + f_{2sat}\left(\varphi_d, \varphi_q\right) + \Delta f_{2sat} \end{cases}$$

on estime lesdites variables d'état ($g_1$, $g_2$) dans le modèle par un observateur fonction des courants et des tensions statoriques exprimés dans le repère diphasé tournant lié au rotor,
on calcule le flux statorique à partir des variables d'état ($g_1$, $g_2$) estimées, et
on calcule le couple électromagnétique à partir du flux statorique calculé.

**2.** Procédé selon la revendication 1, **caractérisé en ce qu'**on règle l'observateur par un algorithme de type Kalman.

**3.** Procédé selon la revendication 1 ou 2, **caractérisé en ce que** le réglage de l'observateur comprend la réception de la vitesse angulaire du rotor comme entrée du système.

**4.** Procédé selon l'une quelconque des revendications 1 à 3, **caractérisé en ce que** le gain de l'observateur est variable dans le temps.

**5.** Procédé selon l'une quelconque des revendications précédentes, **caractérisé en ce que** les paramètres magnétiques considérés sont les inductances linéaires du stator sur chaque axe respectivement du repère diphasé et le flux magnétique généré par les aimants permanents du rotor de la machine.

**6.** Procédé selon l'une quelconque des revendications précédentes, **caractérisé en ce que** les fonctions de saturation représentent la saturation magnétique et la saturation croisée dans la machine.

**Patentansprüche**

**1.** Verfahren zur Schätzung des elektromagnetischen Drehmoments einer dreiphasigen elektrischen Permanentmagnet-Synchronmaschine für ein Elektro- oder Hybridkraftfahrzeug, wobei das Verfahren Schritte umfasst, in deren Verlauf:

die Ströme und Spannungen an den Phasen des Stators der Maschine in einem festen dreiphasigen Bezugssystem gemessen werden, das mit dem Stator verbunden ist,
die Ströme und Spannungen an den Phasen des Stators in einem drehenden zweiphasigen Bezugssystem, das mit dem Rotor verbunden ist, in Abhängigkeit von den Strom- und Spannungsmessungen im dreiphasigen Bezugssystem gemessen werden,
ein Statorstromflussmodell der Maschine bestimmt wird, das Sättigungsfunktionen der Maschine berücksichtigt, so dass in dem Modell Variationen magnetischer Parameter der Maschine berücksichtigt werden, die durch die magnetische Sättigung der Maschine verursacht werden,
Zustandsvariablen ($g_1$, $g_2$) in das Modell eingeführt werden, die die parametrischen Unsicherheiten beschreiben, die den Variationen der magnetischen Parameter der Maschine innewohnen,
wobei die Zustandsvariablen ($g_1$, $g_2$) durch die folgenden Formeln festgelegt sind:

$$\begin{cases} g_1 = \Delta L_{d0}^{-1}\varphi_d + f_{1sat}\left(\overline{\varphi_d}, \overline{\varphi_q}\right) + \Delta f_{1sat} - \dfrac{\Delta \phi_f}{L_{d0}} \\ g_2 = \Delta L_{q0}^{-1}\varphi_q + f_{2sat}\left(\varphi_d, \varphi_q\right) + \Delta f_{2sat} \end{cases}$$

die Zustandsvariablen ($g_1$, $g_2$) in dem Modell durch einen Beobachter geschätzt werden, der eine Funktion der Statorströme und -spannungen ist, die in dem drehenden zweiphasigen Bezugssystem ausgedrückt werden, das mit dem Rotor verbunden ist,
der Statorfluss anhand der geschätzten Zustandsvariablen ($g_1$, $g_2$) berechnet wird und
das elektromagnetische Drehmoment anhand des berechneten Statorflusses berechnet wird.

**2.** Verfahren nach Anspruch 1, **dadurch gekennzeichnet, dass** der Beobachter durch einen Algorithmus vom Typ Kalman geregelt wird.

**3.** Verfahren nach Anspruch 1 oder 2, **dadurch gekennzeichnet, dass** das Regeln des Beobachters das Empfangen der Winkelgeschwindigkeit des Rotors als Eingabe des Systems umfasst.

**4.** Verfahren nach einem der Ansprüche 1 bis 3, **dadurch gekennzeichnet, dass** die Verstärkung des Beobachters zeitlich variabel ist.

5. Verfahren nach einem der vorhergehenden Ansprüche, **dadurch gekennzeichnet, dass** die betrachteten magnetischen Parameter die linearen Induktivitäten des Stators jeweils auf jeder Achse des zweiphasigen Bezugssystems und der Magnetfluss, der von den Permanentmagneten des Rotors der Maschine erzeugt wird, sind.

6. Verfahren nach einem der vorhergehenden Ansprüche, **dadurch gekennzeichnet, dass** die Sättigungsfunktionen die magnetische Sättigung und die Kreuzsättigung in der Maschine darstellen.

**Claims**

1. Method for estimating the electromagnetic torque of a permanent-magnet three-phase synchronous electric machine for an electric or hybrid motor vehicle, the method comprising steps of:

measuring the currents and voltages on the phases of the stator of the machine in a fixed three-phase reference system tied to the stator,
determining the currents and voltages on the phases of the stator in a rotating two-phase reference system tied to the rotor as a function of the current and voltage measurements in the three-phase reference system,
determining a stator flux-current model of the machine, taking into account saturation functions of the machine, so as to consider, in the model, variations in magnetic parameters of the machine caused by the magnetic saturation of the machine,
introducing, into the model, state variables ($g_1$, $g_2$) describing the parametric uncertainties inherent to the variations in the magnetic parameters of the machine,
said state variables ($g_1$, $g_2$) being defined by the following formulas:

$$\begin{cases} g_1 = \Delta L_{d0}^{-1}\varphi_d + f_{1sat}\left(\varphi_d, \varphi_q\right) + \Delta f_{1sat} - \dfrac{\Delta\varphi_f}{L_{d0}} \\ g_2 = \Delta L_{q0}^{-1}\varphi_q + f_{2sat}\left(\varphi_d, \varphi_q\right) + \Delta f_{2sat} \end{cases}$$

estimating said state variables ($g_1$, $g_2$) in the model by way of an observer based on the stator currents and voltages expressed in the rotating two-phase reference system tied to the rotor,
calculating the stator flux based on the estimated state variables ($g_1$, $g_2$), and
calculating the electromagnetic torque based on the calculated stator flux.

2. Method according to Claim 1, **characterized in that** the observer is adjusted using a Kalman algorithm.

3. Method according to Claim 1 or 2, **characterized in that** adjusting the observer comprises receiving the angular speed of the rotor as input of the system.

4. Method according to any one of Claims 1 to 3, **characterized in that** the gain of the observer is time-variable.

5. Method according to any one of the preceding claims, **characterized in that** the magnetic parameters under consideration are the linear inductances of the stator on each axis, respectively, of the two-phase reference system and the magnetic flux generated by the permanent magnets of the rotor of the machine.

6. Method according to any one of the preceding claims, **characterized in that** the saturation functions represent magnetic saturation and cross-saturation in the machine.

[Fig. 1]

# Fig.1

[Fig. 2]

# Fig.2

[Fig. 3]

Fig.3

**EP 3 981 068 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9985564 B
- CN 103346726
- US 7098623 B
- EP 1513250 A
- FR 3035755 B1
- US 7774148 B
- CN 103872951
- JP 2004166408 B